# EUROPEAN PATENT APPLICATION

(11) **EP 1 884 770 A1**
(43) Date of publication of application: **06.02.2008**
(21) Application number: 06126148.3
(22) Date of filing: 14.12.2006
(51) Int. Cl.: G01N 27/12

(54) **Method of manufacturing a gas sensor using a metal ligand and carbon nanotubes**

(30) Priority: 31.07.2006 KR 20060072262
(71) Applicant: Samsung Electronics Co., Ltd., Suwon-si, Gyeonggi-Do (KR)
(72) Inventor: Jung, Sung-ouk, San 14-1 Nongseo-dong Gyeonggi-do (KR); Lee, Soo-suk, San 14-1 Nongseo-dong Gyeonggi-do (KR); Lee, In-ho, San 14-1 Nongseo-dong Gyeonggi-do (KR); Lee, Hun-joo, San 14-1 Nongseo Yongin-si Gyeonggi-do (KR)
(74) Representative: Grünecker, Kinkeldey, Stockmair & Schwanhäusser Anwaltssozietät

(57) **Abstract**

Provided is a method of manufacturing a gas sensor using a metal ligand (122) and carbon nanotubes (121). The method includes forming electrodes (112a,112b) on a substrate (110), coating a paste (120), in which a metal ligand (122) including a metal (123) that has adsorption selectivity with respect to specific gases and carbon nanotubes are mixed, on the substrate (110) on which the electrode (112a,112b) are formed, and reducing the metal ligand in the paste (120).

## Description

### BACKGROUND OF THE INVENTION

### 1. Field of the Invention

The present invention relates to a method of manufacturing a gas sensor, and more particularly, to a method of manufacturing a gas sensor by a simple process using a metal ligand and carbon nanotubes

### 2. Description of the Related Art

While it is true that scientific developments have improved the quality of human life, the extensive and rapid destruction of nature caused by the industrialization process and environmental contamination due to increased energy consumption pose a great threat to many unlimited persons.

Accordingly, the development of a reliable and highly sensitive gas sensor that can detect and quantify various harmful gases that cause air contamination is needed. Presently, gas sensors are widely used in various fields such as industry (manufacturing industry, agricultural industry, livestock industry, office equipment industry, catering industry, ventilation industry), crime prevention (alcohol level check), environment (air contamination surveillance, combustion control), disaster prevention (gas leaking, oxygen deficient alarm in mines, fire surveillance), medical (gas analysis in blood, anesthesia gas analysis), etc., and applications for gas sensors are widening every day.

In general, a gas sensor measures the amount of a harmful gas by change of electrical conductivity or electrical resistance according to the degree of adsorption of gas molecules. In the prior art, the gas sensor was manufactured using a metal oxide semiconductor, a solid electrolyte material, or other organic materials. However, a gas sensor that uses the metal oxide semiconductor or the solid electrolyte material performs a sensing operation when the gas sensor is heated to 200 -600°C or more. A gas sensor that uses an organic material has a very low electrical conductivity, and a gas sensor that uses carbon black and an organic complex has a very low sensitivity.

Carbon nanotubes (CNTs) that have recently drawn attention as a new material can be applied to various industrial fields due to its high electron emission characteristics and high chemical reactivity. In particular, the CNT is a material that has a very wide surface area compared to its volume. Therefore, the CNT is very useful for application to fields such as detection of a minor chemical component and hydrogen storage. A gas sensor that uses CNTs detects a harmful gas by measuring electrical signal (conductance, resistance) that is changed according to the electron property of a gas adsorbed to the CNTs. When the CNTs are used in a gas sensor, there are advantages in that a sensing operation can start at room temperature, and sensitivity and the speed of response are very high since there is a high electrical conductivity when a harmful gas such as NH₃ or NO₂ reacts with the CNTs. However, a gas sensor that uses only CNTs has a disadvantage in that there is a lack of selectivity with respect to a specific gas.

As a method of supplementing the disadvantage of the gas sensor that uses CNTs, a metal that has an adsorption selectivity with respect to a specific gas is deposited on CNTs using a sputtering method or a chemical vapor deposition (CVD) method. However, this method requires expensive equipment such as a sputtering apparatus or a CVD apparatus, and the manufacturing process of gas sensor is also very complicated.

### SUMMARY OF THE INVENTION

The present invention provides a gas sensor that can be manufactured by a simple process using a metal ligand or CNTs.

According to an aspect of the present invention, there is provided a method of manufacturing a gas sensor comprising: forming electrodes on a substrate; coating a paste, in which a metal ligand including a metal that has adsorption selectivity with respect to specific gases and carbon nanotubes (CNTs) are mixed, on the substrate on which the electrodes are formed; and reducing the metal ligand in the paste.

The metal ligand may be reduced using heat and a reducing agent.

The metal ligand may be reduced by baking the paste under a under a H₂ and N₂ atmosphere.

The paste may be coated to cover the electrodes formed on the substrate.

The coating of the paste may be performed by coating a mixed solution on the substrate on which the electrodes are formed after the mixed solution is formed by uniformly distributing the CNTs and the metal ligand in a predetermined solvent.

The electrodes may comprise first and second electrodes formed in an inter-digitated shape.

### BRIEF DESCRIPTION OF THE DRAWINGS

The above and other features and advantages of the present invention will become more apparent by describing in detail exemplary embodiments thereof with reference to the attached drawings in which:
FIGS. 1A through 3B are drawings for explaining a method of manufacturing a gas sensor according to an embodiment of the present invention;
FIGS. 4 through 6 are scanning electron microscope (SEM) images of CNTs, Pd, and a complex of CNTs and Pd, respectively; and
FIG. 7 is a graph showing the comparison of conductance variation according to the concentration of methane in a conventional gas sensor that uses only CNTs and a gas sensor that uses a complex of CNTs and Pd, according to an embodiment of the preset invention.

### DETAILED DESCRIPTION OF THE INVENTION

The present invention will now be described more fully with reference to the accompanying drawings in which exemplary embodiments of the invention are shown. In the drawings, like reference numerals in the drawings denote like elements and the thicknesses of layers and regions are exaggerated for clarity.

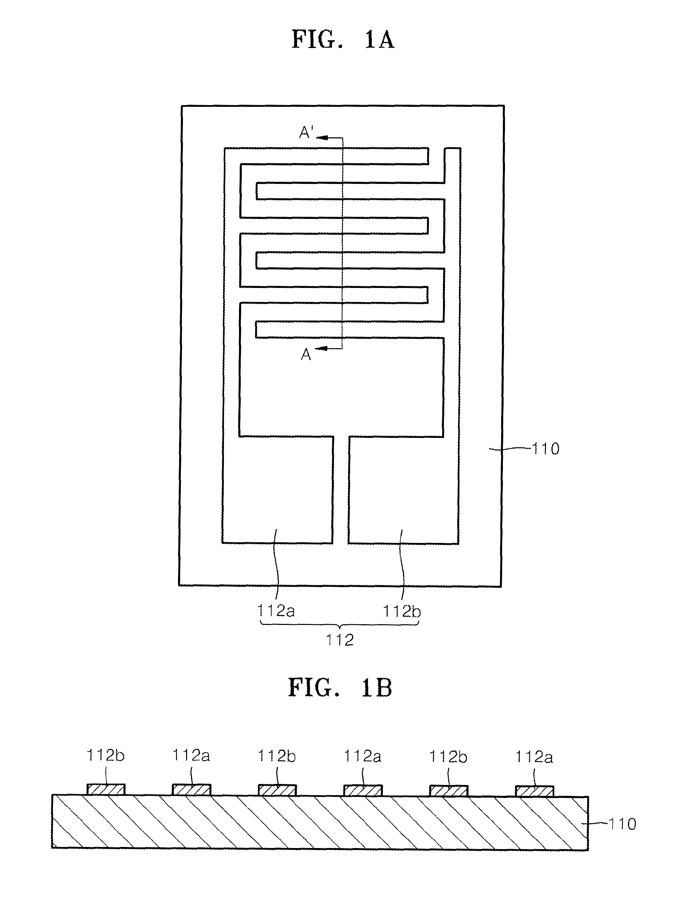

FIGS. 1A through 3B are drawings for explaining a method of manufacturing a gas sensor according to an embodiment of the present invention.

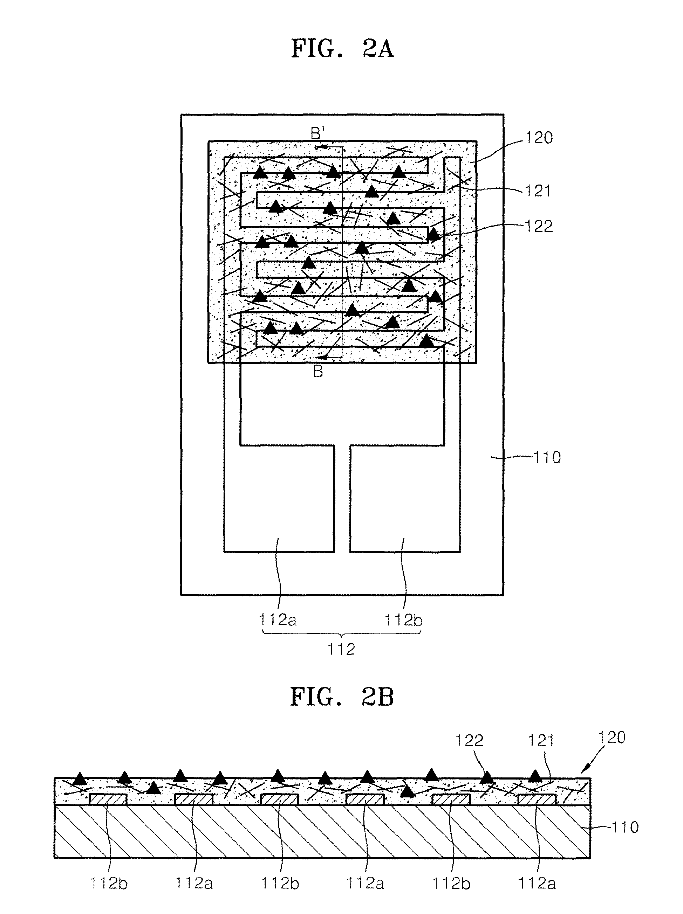

FIG. 1 A is a plan view illustrating electrodes formed on a substrate 110 and FIG. 2 is a cross-sectional view taken along the line A-A' of FIG. 1A.

Referring to FIGS. 1A and 1 B, electrodes 112 that include a first electrode 112a and a second electrode 112b are formed on the substrate 110. The first and second electrodes 112a and 112b can be formed in, for example, an inter-digitated shape, but the first and second electrodes 112a and 112b are not limited thereto and can be formed in various other shapes. The first and second electrodes 112a and 112b can be formed by patterning a metal material having a high electrical conductivity after the material is deposited on the substrate 110. The first and second electrodes 112a and 112b can be formed of Au or Ti, but the present invention is not limited thereto.

FIG. 2A is a plan view illustrating a paste 120, in which a metal ligand 122 and carbon nanotubes (CNTs) 121 are mixed, coated on the substrate 110 on which the electrodes 112 are formed, and FIG. 2B is a cross-sectional view taken along the line B-B' of FIG. 2A.

Referring to FIGS. 2A and 2B, the paste 120 in which the metal ligand 122 and CNTs 121 are mixed is prepared. The paste 120 can be manufactured by uniformly distributing the metal ligand 122 and the CNTs 121 in a predetermined solvent.

In the present embodiment, the metal ligand 122 includes a metal that has adsorption selectivity with respect to a specific gas. In general, there are gases that can be adsorbed by a specific metal. More specifically, a gas consisting of dichloroethylene, acetic acid, or propanoic acid can be adsorbed to Ag, and a gas consisting of ethylene, benzene, or cyclohexane can be adsorbed to lr. Also, a gas consisting of methane or formic acid can be adsorbed to Mo, and a gas consisting of methane, methanol, or benzene can be adsorbed to Ni. A gas consisting of benzene, acetylene, ethylene, methanol, benzene+ CO, or methane can be adsorbed to Pd, and a gas consisting of aniline, ammonia, cyanobenzene, m-xylene, naphthalene, N-butylbenzene, or acetonitrile can be adsorbed to Pt. Besides the above examples, there are various metals that have adsorption selectivity with respect to specific gases. In the present embodiment, a gas sensor is manufactured using the characteristics of metals that selectively adsorb specific gases. That is, a metal that has adsorption selectivity with respect to specific gases as described above is included in the metal ligand 122 that is mixed with the CNTs 121.

Next, the paste 120 in which a metal ligand 122 and CNTs 121 are mixed is coated on the substrate 110 on which the electrodes 112 are formed. Here, the paste 120 can be coated to cover the electrodes 112.

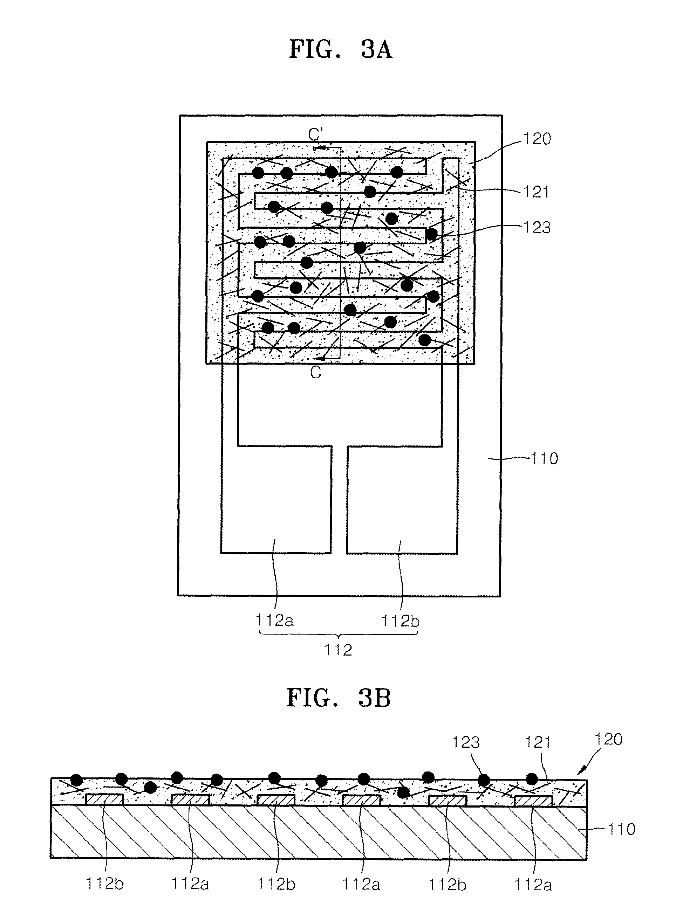

FIG. 3A is a plan view illustrating a reduced state of the metal ligand 122 in the paste 120, and FIG. 3B is a cross-sectional view taken along the line C-C' of FIG. 3A.

Referring to FIGS. 3A and 3B, the manufacture of a gas sensor according to an embodiment of the present invention is complete when a metal 123 is formed by reducing the metal ligand 122 present in the paste 120 coated on the substrate 110 on which the electrodes 112 are formed. The reduction of the metal ligand 122 can be performed using heat and a reducing agent. More specifically, the metal ligand 122 can be reduced by baking at a predetermined temperature under a H₂ and N₂ atmosphere. When the metal ligand 122 is reduced, a complex, in which there is the metal 123 that has adsorption selectivity with respect to specific gases and the CNTs 121, is present in the paste 120.

### <Experiment 1: gas sensor manufacturing>

PdC1₂ 0.005g/50ml was used as a metal ligand that includes a metal that has adsorption selectivity with respect to specific gases, and single-walled nanotubes (SWNT) 0.05g/50mg were used. The PdCl₂ and the SWNT are mixed in an N,N-dimethylformamide (DMF) solvent in a mixing ratio of 1:1 using sonication. The manufactured paste was coated on a substrate on which electrodes are formed using a spray coating method. Next, the paste in which the PdCl₂ and CNTs were mixed was baked at a temperature of approximately 250°C for four hours under a H₂ and N₂ atmosphere. As a result, a complex of Pd reduced from PdCl₂ and CNTs was formed in the paste.

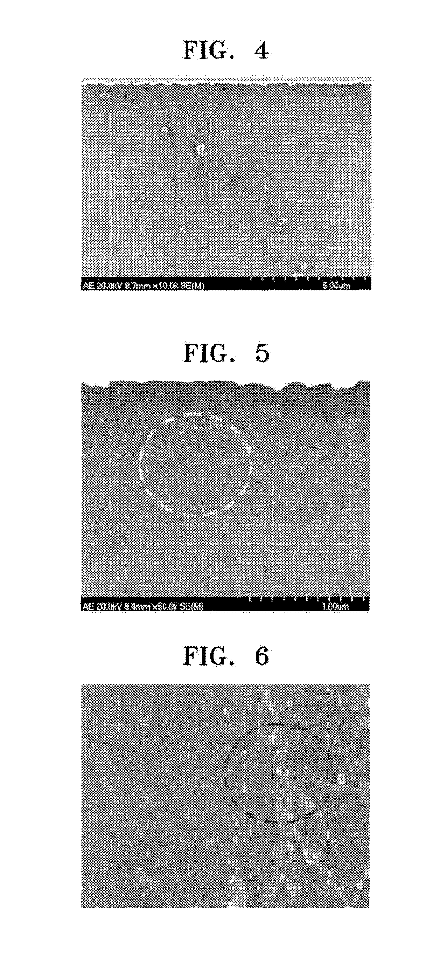

FIG. 4 is a scanning electron microscope (SEM) image of SWNT, FIG. 5 is a SEM image of Pd, and FIG. 6 is a SEM image of a complex of Pd and CNTs manufactured in experiment 1. Referring to FIG. 6, it is seen that Pd is gathered around CNTs.

### <Experiment 2: gas measurement>

The conductance variations, ΔG = [G(methane)-G(air)]/G(air), according to a change in concentration of methane gas that selectively reacts with Pd, were measured using a gas sensor that includes a complex of CNTs and Pd, manufactured in experiment 1 and a conventional gas sensor that only includes CNTs. The concentrations of methane gas used were 25ppm, 125ppm, and 250ppm, and the conductance variations were measured at room temperature.

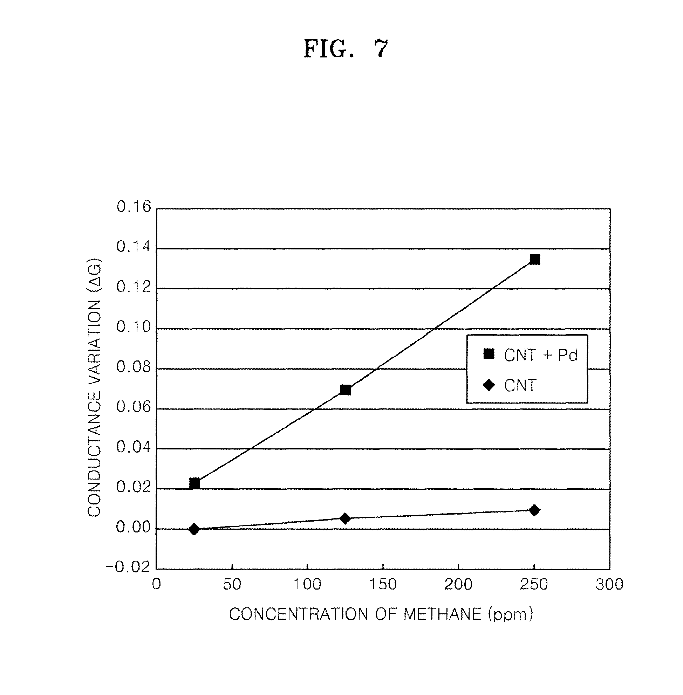

The measurements are shown in FIG. 7. FIG. 7 is a graph showing the comparison of conductance variations according to a change in concentration of methane in a conventional gas sensor that uses only CNTs and a gas sensor that uses a complex of CNTs and Pd, manufactured in experiment 1, according to an embodiment of the preset invention. Referring to FIG. 7, as the concentration of methane gas increases to 25ppm, 125ppm, and 250ppm, the conductance variations of CNTs respectively were 0.00, 0.01, and 0.01, and the conductance variations of the complex of Pd and CNTs respectively were 0.02, 0.07, and 0.13. That is, the CNTs in the conventional gas sensor do have little conductance variation according to the increase in the concentration of methane gas. However, the complex of Pd and CNTs in the gas sensor according to the present embodiment shows a large conductance variation according to the increase in the concentration of methane gas. From the result of the experiment, it is seen that the gas sensor that uses only CNTs does not have selectivity with respect to methane gas, but the gas sensor that uses a complex of Pd and CNTs has selectivity with respect to methane gas.

As described above, according to the present invention, a gas sensor that includes a complex of a metal and CNTs can be manufactured by coating a paste, in which a metal ligand and CNTs are mixed, on a substrate and reducing the metal ligand. Accordingly, a gas sensor can be manufactured by a simple process compared to a conventional process in which a metal is deposited on the CNTs using a sputtering method or a CVD method. The gas sensor manufactured according to the present invention includes not only CNTs but also a metal that has adsorption selectivity with respect to specific gases. Therefore, the gas sensor can have selectivity with respect to specific gases unlike the conventional gas sensor in which only CNTs are used. The gas sensor according to the present invention can sense various gases by changing a metal mixed with CNTs in the gas sensor.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of manufacturing a gas sensor comprising:
forming electrodes on a substrate;
coating a paste, in which a metal ligand including a metal that has adsorption selectivity with respect to specific gases and, carbon nanotubes (CNTs) are mixed, on the substrate on which the electrode are formed; and
reducing the metal ligand in the paste.

2. The method of claim 1, wherein the metal ligand is reduced using heat and a reducing agent.

3. The method of claim 2, wherein the metal ligand is reduced by baking the paste under a H₂ and N₂ atmosphere.

4. The method of claim 1, wherein the paste is coated to cover the electrodes formed on the substrate.

5. The method of claim1, wherein the coating of the paste is performed by coating a mixed solution, which is formed by uniformly distributing the CNTs and the metal ligand in a predetermined solvent, on the substrate on which the electrodes are formed.

6. The method of claim1, wherein the electrodes comprise first and second electrodes formed in an inter-digitated shape.
